# EUROPEAN PATENT APPLICATION

(11) **EP 1 324 407 A1**
(43) Date of publication of application: **02.07.2003**
(21) Application number: 02028108.5
(22) Date of filing: 17.12.2002
(51) Int. Cl.: H01M 4/38, C22C 19/03

(54) **Hydrogen storage material**

(30) Priority: 17.12.2001 JP 2001382743
(71) Applicant: Mitsui Mining & Smelting Co., Ltd, Tokyo (JP)
(72) Inventor: Hirayama, Shigeo, Mitsui Mining&Smelting C. Ltd., Takehara-shi, Hiroshima (JP); Inoue, Hidetoshi, Mitsui Mining&Smelting C. Ltd., Takehara-shi, Hiroshima (JP); Sakai, Minoru, Mitsui Mining&Smelting C. Ltd., Takehara-shi, Hiroshima (JP); Kagei, Shinya, Mitsui Mining&Smelting C. Ltd., Takehara-shi, Hiroshima (JP); Okitou, Takashi, Mitsui Mining&Smelting C. Ltd., Takehara-shi, Hiroshima (JP); Yasuda, Kiyotaka, Mitsui Mining&Smelting C., Ltd., Ageo-shi, Saitama (JP); Mukai, Daisuke, Mitsui Mining&Smelting C., Ltd., Ageo-shi, Saitama (JP)
(74) Representative: Forstmeyer, Dietmar, Dr. rer. nat., Dipl.-Chem.

(57) **Abstract**

A hydrogen storage material having an CaCu₅ type crystal structure represented by formula:

MmNiₐMn_{b}Al_{c}Co_{d}

wherein Mm is misch metal, 3.8≤a, 0.4<d<0.6, and 5.05≤a+b+c+d<5.35. When used in a battery, the hydrogen storage material maintains well-balanced high levels of battery output and life, the important battery characteristics.

## Description

### Field of the Invention:

The present invention relates to a hydrogen storage material and more particularly to a hydrogen storage material which, when used in a battery, exhibits satisfactory output characteristics and contributes to an extended battery life.

### Description of Related Art:

Nickel-metal hydride storage batteries (secondary batteries) having a hydrogen storage material in the anode have recently been attracting attention as high capacity alkali storage batteries supplanting nickel-cadmium storage batteries. The hydrogen storage materials that are currently used widely are hydrogen storage alloys composed of five elements, i.e., Mm (misch metal, a mixture of rare earth elements), Ni, Al, Mn, and Co.

The Mm-Ni-Mn-Al-Co alloys have been used widely as an electrode material. Compared with La-based alloys, the Mm-Ni-Mn-Al-Co alloys enable constructing an anode out of relatively cheap materials and provide closed nickel-metal hydride storage batteries having a long cycle life and a suppressed inner pressure rise which is caused by gas generated in case of an overcharge.

The Mm-Ni-Mn-Al-Co alloys in current use are designed to have a prolonged battery cycle life by preventing the alloys from reducing their grain size. It is generally known that about 10% by weight of Co (0.6 to 1.0 in an atomic ratio) is required to prevent the grain size reduction. It is also accepted that a given amount of Co is necessary for securing excellent hydrogen storage characteristics and anticorrosion.

However, the material cost increases with the Co content, which is problematical from the aspect of material cost. Taking into consideration application of the hydrogen storage material to large batteries, such as the power source of electric vehicles, and the ever expanding market of nickel-metal hydride storage batteries, in particular, the material cost is weighty in choosing anode materials and has been a matter of concern.

As an approach for settling the above problem, JP-A-2001-40442 discloses an Mm-Ni-Mn-Al-Co alloy having a specific composition and, in particular, a cobalt atomic ratio reduced to 0.2 to 0.4. The hydrogen storage material disclosed exhibits excellent hydrogen storage characteristics, excellent insusceptibility to grain size reduction, and, when used in batteries, manifests satisfactory output characteristics and satisfactory initial characteristics. Besides, it is highly reliable in durability and storage stability.

The hydrogen storage material disclosed in JP-A-2001-40442, however, still has a room for further improvement on battery service life when applied as an anode, which is as important performance required of batteries as output characteristics.

JP-A-6-279900 and JP-A-2000-234133 disclose in claims thereof Mm-Ni-Mn-Al-Co alloy having an extensive range of compositional ratios (atomic ratios). JP-A-2002-75349 demonstrates in Comparative Example 1 thereof an example of Mm-Ni-Mn-Al-Co alloy, wherein Co ratio is 0.6.

However, the hydrogen storage material disclosed in JP-A-6-279900, JP-A-234133 and JP-A-2002-75349 cannot maintain well-balanced output characteristics and life characteristics, which are the important performance requirements of batteries.

### Summary of the Invention

An object of the present invention is to provide a hydrogen storage material which, when used in a battery, maintains well-balanced output characteristics and life characteristics, the important performance requirements of batteries.

As a result of extensive studies, the present inventors have found that the above object is accomplished by specifying nickel and cobalt contents, adjusting a lanthanum content in misch metal, and controlling the ABₓ alloy structure within a specific nonstoichiometric ratio.

The present invention has been reached based on the above finding and provides a hydrogen storage material having an CaCu₅ type crystal structure represented by formula:

MmNiₐMn_{b}Al_{c}Co_{d}

wherein Mm is misch metal, 3.8≤a, 0.4<d<0.6, and 5.05≤a+b+c+d<5.35.

The present invention also provides the hydrogen storage material, wherein the misch metal Mm has an La content of 18 to 30% by weight based on the hydrogen storage material. The present invention also provides the hydrogen storage material,
wherein b is 0.1 to 0.6 and c is 0.1 to 0.6. Further, the present invention provides the hydrogen storage material, wherein d is 0.44 to 0.58.

### Detailed Description of the Preferred Embodiments

The hydrogen storage material according to the present invention is an AB₅ type hydrogen storage alloy having a CaCu₅ type crystal structure represented by formula:

MmNiₐMn_{b}Al_{c}Co_{d}

wherein Mm is misch metal, 3.8≤a, 0.4<d<0.6, and 5.05≤a+b+c+d<5.35.

In the above formula, Mm is misch metal, a mixture of rare earth elements such as La, Ce, Pr, Nd, and Sm. The misch metal Mm preferably has an La content of 18 to 30% by weight based on the hydrogen storage material. With an La content of less than 18% by weight, a battery containing the hydrogen storage material tends to have insufficient capacity. La contents exceeding 30% by weight tend to reduce the battery life. The hydrogen storage material is an AB₅ type hydrogen storage alloy having a CaCu₅ type crystal structure having a B site-rich nonstoichiometric composition with B site having an atomic ratio of 5.05 or greater and smaller than 5.35.

In this hydrogen storage material, the compositional ratio (atomic ratio) of NiₐMn_{b}Al_{c}Co_{d} fulfills the following relationships. The ratio of Ni: 3.8≤a. The ratio of Co: 0.4<d<0.6. (a+b+c+d) is 5.05 or greater and smaller than 5.35.

Ni is effective to improve output characteristics of a battery. The ratio of Ni, represented by a, is 3.8 or greater, preferably 3.9 to 4.5. If a is less than 3.8, a battery has reduced output characteristics and a reduced capacity retention which results in an unsatisfactory battery life. If it exceeds 4.5, the hydrogen storage material has insufficient spalling resistance for assuring a battery life.

The ratio of Mn, represented by b, is preferably 0.1 to 0.6, still preferably 0.2 to 0.4. Mn ratios lower than 0.1 may result in reduction of a battery life (spalling resistance). Mn ratios higher than 0.6 tend to result in reduced homogeneity and a reduced battery life.

The ratio of Al, represented by c, is preferably from 0.1 to 0.6, still preferably 0.2 to 0.4. Al ratios lower than 0.1 tend to result in reduction of a battery life (spalling resistance). Al ratios higher than 0.6 tend to result in reduced homogeneity and a reduced battery life.

Co is effective to improve life characteristics. The ratio of Co, represented by d, is greater than 0.4 and smaller than 0.6, preferably from 0.44 to 0.58, and more preferably from 0.44 to 0.55. If d is 0.4 or smaller, the hydrogen storage material fails to secure a sufficient capacity retention and a satisfactory battery life. If d is 0.6 or greater, the battery will have reduced output characteristics. When d is within the particular range of 0.44 to 0.58, high levels of output characteristics and life characteristics are maintained in good balance.

The sum of a, b, c, and d, hereinafter sometimes referred to as x, is 5.05 or greater and smaller than 5.35. If x is smaller than 5.05, a battery has a decreased capacity retention to have a reduced life. If it is 5.35 or greater, the alloy has reduced homogeneity, and a battery has a reduced capacity retention and a reduced life.

A preferred process for producing the hydrogen storage material of the present invention is then described.

Raw materials of the hydrogen storage material are weighed to give an alloying composition within the above-specified ranges and mixed up. The mixture is melted by means of, for example, a high frequency induction furnace based on induction heating. The resulting melt is poured into a casting mold, for example, a mold of water cooling type at a casting temperature of 1350 to 1600°C. The pouring temperature is 1200 to 1500°C. The term "casting temperature" as used herein means the temperature of the melt in the crucible at the beginning of casting, and the term "pouring temperature" means the temperature of the melt at the inlet of the casting mold (i.e., the temperature of the melt before entering the casting mold).

The resulting hydrogen storage material is heat treated in an inert gas atmosphere (e.g., argon gas) at 1000 to 1100°C for 1 to 6 hours. An as-cast alloy structure usually shows grain boundary microsegregation chiefly of Mn. The heat treatment is to reduce the segregation by heating thereby to homogenize the alloy.

There is thus obtained a hydrogen storage material. The hydrogen storage material is crushed, pulverized, and is suitably used as an anode of high-output alkali storage batteries. The alkali storage batteries containing the hydrogen storage material of the invention exhibit a unique combination of high output characteristics and a long life.

The present invention will now be illustrated in greater detail by way of Examples.

### EXAMPLE 1

Raw materials of a hydrogen storage material were weighed to give an alloying composition of MmNi_{3.85}Mn_{0.4}Al_{0.3}Co_{0.5} (AB_{5.05}) and mixed up. The mixture was put in a crucible, and the crucible was set in a high frequency melting furnace. After evacuating the furnace to a degree of vacuum of 10⁻⁴ to 10⁻⁵ Torr, the mixture was heat melted in an argon gas atmosphere and cast into a copper casting mold of water cooling type at 1350°C (pouring temperature: 1250°C) to obtain an alloy. The resulting alloy was heat treated in an argon atmosphere at 1050°C for 5 hours to obtain a hydrogen storage material.

### EXAMPLES 2 TO 13 AND COMPARATIVE EXAMPLES 1 TO 8

Hydrogen storage materials were obtained in the same manner as in Example 1, except for changing the alloying composition as shown in Table 1 below. Characterization:
The hydrogen storage materials obtained in Examples 1 to 13 and Comparative Examples 1 to 8 were evaluated by measuring their output characteristics and capacity retention (life characteristics) in accordance with the following methods. The results obtained are shown in Table 1.

### Preparation of electrode cell:

A powdered hydrogen storage material having a grain size adjusted to 22 to 53 µm was mixed with predetermined amounts of a conductive agent and a binder. The mixed powder was pressed into a pellet electrode, which was used as an anode. The pellet anode was combined with a cathode having a sufficient capacity (sintered nickel hydroxide) with a separator interposed therebetween. The combined electrodes were dipped in a potassium hydroxide aqueous solution having a specific gravity of 1.30 to prepare a model cell.

### Setting of charge and discharge conditions:

1) For initial activation
   Charge: 0.2C - 130%; Discharge: 0.2C - 0.7 V cut-off
   Charge/discharge cycle: 15 cycles
   Temperature: 20°C
2) For measurement of output characteristics
   Charge: 0.2C - 130%; Discharge: 1C - 0.7 V cut-off
   Temperature: 0°C
3) For measurement of life characteristics (cycle test)
   Charge: 2C/3-1h; Discharge: 2C/3-1h
   Charge/discharge cycle: 300 cycles

### Capacity retention (life characteristics):

After the cycle test, the battery was charged at a 0.2C rate to 130%. The discharge capacity was measured in a discharge at a 0.2C rate and at a cut-off voltage of 0.7 V. The ratio of the measured discharge capacity to the initial one immediately after the activation is the capacity retention.

### Output characteristics:

After the initial activation, a discharge capacity was measured in a discharge under the above-described low-temperature and high-rate discharge conditions (0°C, 1C).

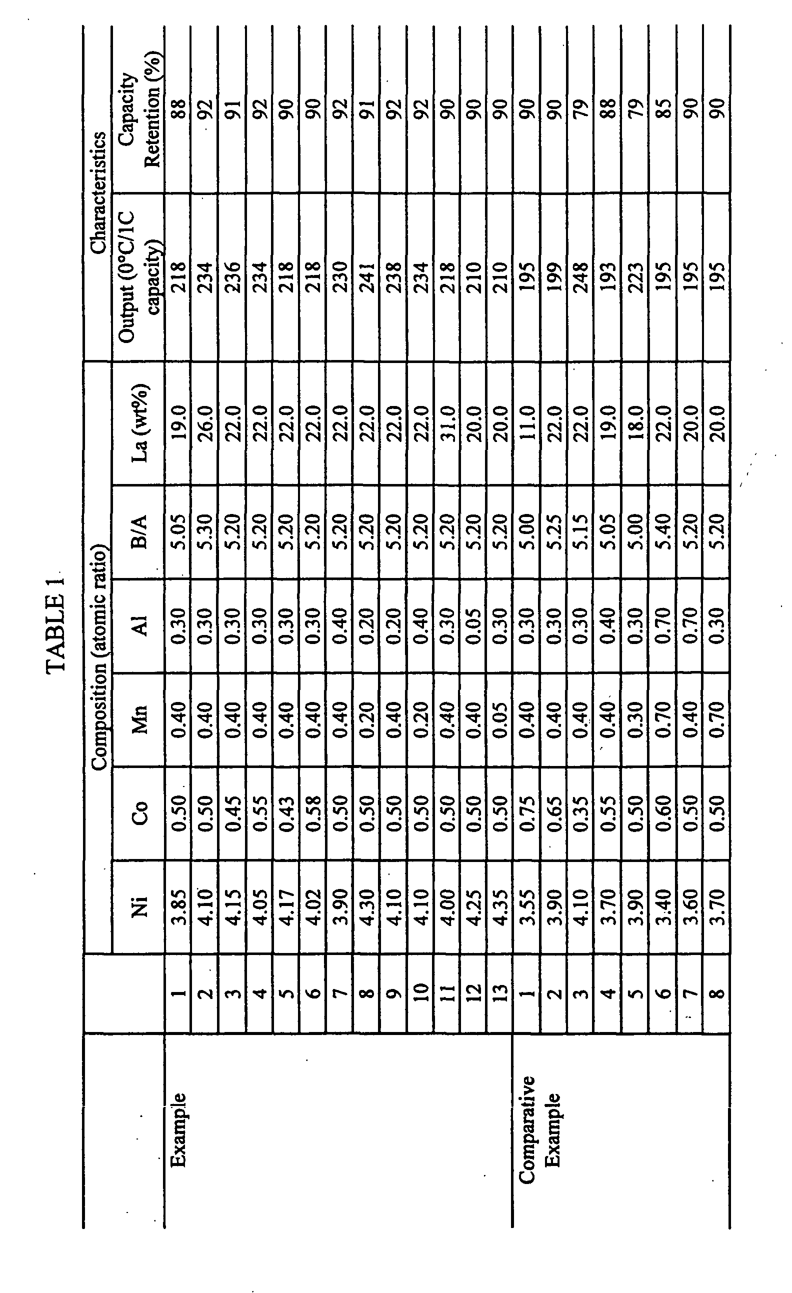

As is apparent from the results in Table 1, the batteries having the hydrogen storage materials of Examples 1 to 13 show higher levels of output characteristics and capacity retention in good balance as compared with those of Comparative Examples 1 to 8. Examples 2 to 4 and 7 to 10, wherein Co ratios are within the particular range of 0.44 to 0.58, Ni ratios are 3.9 to 4.5, and Mm has an La content of 18 to 30% by weight based on the hydrogen storage material, show higher levels of output characteristics and capacity retention in good balance.

Having optimized nickel and cobalt contents, nonstoichiometric ratio, and lanthanum content, the hydrogen storage material of the present invention, when used as an anode of batteries, is capable of maintaining high levels of output and life characteristics in good balance.

## Claims

1. A hydrogen storage material having an CaCu₅ type crystal structure represented by formula:
MmNiₐMn_{b}Al_{c}Co_{d}
wherein Mm is misch metal, 3.8≤a, 0.4<d<0.6, and 5.05≤a+b+c+d<5.35.

2. The hydrogen storage material according to claim 1, wherein said misch metal Mm has a lanthanum content of 18 to 30% by weight based on the hydrogen storage material.

3. The hydrogen storage material according to claim 1 or 2, wherein b is 0.1 to 0.6 and c is 0.1 to 0.6.

4. The hydrogen storage material according to claim 1, 2 or 3, wherein d is 0.44 to 0.58.
